(19) Europäisches Patentamt
European Patent Office
Office européen des brevets

(11) **EP 4 060 889 A1**

(12) **EUROPEAN PATENT APPLICATION**

(43) Date of publication:
**21.09.2022 Bulletin 2022/38**

(21) Application number: **21382224.0**

(22) Date of filing: **19.03.2021**

(51) International Patent Classification (IPC):
**H02P 9/00** (2006.01)

(52) Cooperative Patent Classification (CPC):
**H02P 9/007; H02P 9/006;** H02P 2207/073

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy Innovation & Technology S.L.**
**31621 Sarriguren (Navarra) (ES)**

(72) Inventor: **The designation of the inventor has not yet been filed**

(74) Representative: **SGRE-Association**
**Siemens Gamesa Renewable Energy GmbH & Co KG**
**Schlierseestraße 28**
**81539 München (DE)**

(54) **DYNAMICALLY OBTAINING MAXIMUM CAPACITIES IN A DFIM ELECTRIC DRIVE**

(57)     It is described a method of determining at least one high-level limitation (HLL) of a system (107) including a doubly fed induction machine (105), the method comprising: receiving at least one system operation condition parameter (129) related to the actual operation condition; calculating the high-level limitation (HLL) based on at least one low-level limitation (LLL) of at least one component of the system and the system operation condition parameter (129), wherein the method is particular performed, while the system is in operation.

FIG 1

**Description**

Field of invention

The present invention relates to a method of determining at least one high-level limitation of a system including a doubly fed induction machine and further relates to a corresponding arrangement which is in particular configured to carry out the method. Furthermore, the present invention relates to a wind turbine comprising the arrangement and further comprising a doubly fed induction machine.

Art Background

An electrical system including a doubly fed induction machine can be operated in a particular operation range which might be defined by plural limit values of operational parameters. Typical limit values of operation parameters may for example comprise a limit value of active power and/or reactive power. Conventionally, limit values may for example be stored in one or more look-up tables. The values given in the look-up tables are conventionally calculated offline. For offline calculation, input values may be utilized also being related to manufacturer given limit values of plural components of the electrical system.
Prior art methods based on offline calculation method have several drawbacks as listed below:

- As low-level-limits (LLLs) are fixed, the system cannot be optimized for every situation. For example, rotor current dependence as function of machine speed is not usually considered, having an underestimation of system capacities at high machine slips.
- Transient and steady-state limitations cannot be simultaneously dealt as time or internal temperatures are not variables. If LUT is generated with a steady-state limitation, the command will be over limited, and the system will not be operating at its real maximum capabilities. High-level limitation (HLL) calculated with steady-state LLL in LUT temporary provides an underestimation of the system capabilities. The command is then highly limited in the first instants. In comparison, the real HLL calculated with a dynamic LLL would have allow a bigger command right after the step. Then, after a period, the dynamic HLL will decrease as an effect of the accumulated temperature. On contrary, if transient limitation is chosen and a command exceeds steady-state limitations during a certain long time, the converter generates an alarm and disconnects.
- The maximum size of the LUT constrains the accuracy: system capabilities are not linear and between two LUT points. Then, again, it leads to a non-optimum performance as the capabilities could be not maximized in some conditions and the system could exceed capabilities in some other circumstances.
- Some rare operating points are not well covered e.g. overspeed.

Patent US10352298B2 discloses a method for online determining a DC link voltage (within its operating range) aimed to minimize the cut-in rotor speed. That is online calculating a maximum capacity (operation at very low rotor speeds) given a limitation (DC-link voltage).
Patent US10355629B2 adapts the maximum active power command of the machine as function of the stator voltage and the temperature. A variable which is being online maximized under certain limitations.
Patent US10396694B2 presents a method where the maximum stator reactive current is online calculated as function of the maximum DC-link voltage (LLL) and the rotor speed and stator/grid voltage (system conditions). Then, the HLL is used to limit reactive current command.
Patents US10355629B2 and US10396694B2 have some drawbacks: These patents provide an active power limit or reactive power limit for a very particular case. Maximum active quantity (power or torque) is not only a function of the voltage and temperature; system conditions like rotor speed and grid frequency and LLLs as stator, rotor and grid converter currents do also affect the maximum active power. In case of reactive power, grid frequency and stator, rotor and grid converter also constrain its maximum value.
Patent US10570882B2 gets real-time parameters of the system, measures system conditions including at least one wind condition, gets LLLs and them calculates the maximum active power, the maximum machine reactive power and the maximum grid converter reactive, having the maximum overall reactive power for each wind turbine. The fact that wind condition is considered in the calculus means that the invention aims to provide not only the limitation of the electric (or even mechanical system) but also the available wind power.
Patent US10570882B2 already solves the weak points of previous patents. However, the method does not address transient capabilities.
Patent US10756658B2 presents a method for reactive power sharing between GSC and stator sides. Stress factors are calculated as function of current factors and current limits. These factors are employed in the sharing.
These stress factors cover somehow the transient capability for the reactive power injection. For example, if the grid converter is sufficiently stressed due to strong overload, the method in US10756658B2 might limit the reactive power injection through the grid converter and might drive the reactive demands towards the stator circuit.

However, no transient capabilities are addressed in terms of the active quantity (active power or torque). Both active and reactive transient capabilities are interesting features. They are an extra step towards the optimization of the electric drive operation. For example, in wind power, the electric drive must face extreme transient conditions as wind gusts, drive train damping support, low noise operation, synthetic inertia emulation, etc. where demands are temporary higher than in steady-state. In such situation, a calculation method providing capabilities with possible overloads generates added value.

Furthermore, the method disclosed in the previous patents are based on an absolute calculation. Absolute calculation might be affected by model inaccuracies like parameter drifts, unmodeled non-linearities, etc. Therefore, the resulting maximum capacities (active and reactive quantities) will be provided with a certain error. If capacities are underestimated, the operation will not be optimized. If capacities are overestimated, system limits can be exceeded leading to undesired system trips and/or component integrity risks with premature failure.

Thus, there may be a need for a method and a corresponding arrangement for determining at least one high-level limitation of a system including a doubly fed induction machine, wherein a less conservative high-level limitation can be determined, and overall performance may be improved. Furthermore, there may be the need to deal in an improved manner with transient and steady state limitations. Furthermore, adaptation of the high-level limitation to the actual operating point may also contribute to improving performance and accuracy.

## Summary of the Invention

This need may be met by the subject matter according to the independent claims. Advantageous embodiments of the present invention are described by the dependent claims.

According to an embodiment of the present invention it is provided a method of determining at least one high-level limitation, in particular regarding transient and steady state limitations for both active and reactive quantities, of a system including a doubly fed induction machine, the method comprising: receiving at least one system operation condition parameter related to the actual operation condition; calculating the high-level limitation based on at least one low-level limitation of at least one component of the system and the system operation condition parameter, wherein the method is particular performed, while the system is in operation.

The method may be implemented in software and/or hardware (e.g. processor and/or control unit) and may for example be performed by a portion or a module of a controller of the electrical system. The electrical system may in particular comprise or be operated as a generator system and/or a motor system. Thus, the system may be operated in a motor mode and/or in a generator mode. In particular, the system may be operable in a generator mode and may be part of a wind turbine. In other embodiments, the system may be a part of a steam turbine system, a gas turbine system, a tidal energy system or any other energy production facility.

The doubly fed electrical machine (DFIM) comprises field magnetic windings and armature windings which are separately connected to equipment outside the machine. The doubly fed electrical machine may comprise two three-phase windings, one stationary and one rotating, which are both separately connected to equipment outside the generator. The windings of the stator may be directly connected to a for example three-phase AC power output terminal which may have for example have the frequency of a utility grid, like 50 Hz or 60 Hz. The other windings may provide variable frequency three-phase AC power and may be provided or coupled to the wind turbine rotor at which plural rotor blades are mounted. The rotating winding may be coupled to a converter system comprising for example an AC-DC converter portion (also referred to as rotor side converter), a DC link and a DC-AC converter portion (also referred to as grid side converter portion). The converter portions may each comprise plural high power controllable switches, such as IGBT semiconductor switches. The converter system may be bidirectional in that it can pass power in either direction.

The high-level limitation may correspond or may relate to a limitation (such as maximum or minimum of allowed value) of a high-level operational parameter, in particular electrical operational parameter, such as active power and/or reactive power of a component of the system, for example the grid side converter portion, the rotor side converter portion, the DFIM or a combination of these components. The high-level limitation may be a limitation applicable to or associated with the actual operating condition. The high-level limitation may dynamically and/or continuously or regularly after particular time intervals be determined, in particular while the electrical system is in operation, for example while the system produces electrical energy at an output terminal. The output terminal of the system may be connected (via one or more transformers) to a utility system.

The system operation condition parameter may relate to a mechanical and/or electrical parameter, such as rotational speed of the rotor of the DFIM, frequency and/or voltage and other parameters as described below.

The low-level limitation may relate to a limitation of a low-level operational parameter of the electrical system. The low-level limitation may or may not be a quantity which is determined or calculated according to embodiments of the present invention. The low-level limitation may for example correspond to a limitation of a current and/or a voltage of a converter portion of the system or for example the DC link. The high-level limitation may correspond or relate to a limitation of a high-level operational parameter which may be calculable from one or more low-level operational parameters. The low-level limitation may partly or entirely be calculated from manufacturer given limit values.

The system may be in operation while the method is being performed, i.e. the system may generate electrical power when in generator mode or may generate mechanical power when in motor mode. The calculated low-level limitation may change, when the system operation condition parameter or plural system operation condition parameters change, i.e. when the operational working point changes. Therefore, performance of the system may be improved in that the operational condition is considered for respective determination of the high-level limitation. In particular, plural high-level limitations may be determined in embodiments of the present invention, in particular for all relevant operational parameters of the electrical system.

According to an embodiment of the present invention, the low-level limitation includes at least one (intrinsic) constraint of at least one component of the system, in particular including at least one of: a maximum stator current, a maximum rotor current, a maximum line current, a maximum converter current, a maximum DC-link voltage, wherein the low-level limitation is given in dependence of at least one system operation condition parameter, wherein the low-level limitation relates in particular to a limit value of a low-level operational parameter.

The respective maximum current and/or maximum voltage may be given in dependence of one or more operational parameters and/or may be given as transient maximum values or steady state maximum values, depending on the application.

Below calculation of LLLs is explained as e.g. performed by an Electric limit block. For each LLL, firstly an initial version of the LLL is calculated which may be referred to as "internal LLL". It usually attends to the information available in the converter about the limit of the operational parameter. If this operational parameter only affects the converter, e.g. the DC-link voltage, the internal LLLs becomes the final LLL.

In those LLLs related with an operation parameter that affects several components (the converter and other item), the internal LLL (representing the converter) may be combined with the external LLL (representing the other item). The resulting final LLL is the most constraining.
Subsystem 2 (see below, e.g. master system) is configured with information of the other item, and can provide an external LLL for this operational parameter. For example, rotor current flows in both rotor side converter and DFIM rotor winding. The converter may only have information about its maximum rotor limit. Subsystem 2 may have information of the DFIM maximum rotor current (supplied by the manufacturer). External LLLs give flexibility to the design so that one power surfing implementation can deal with different DFIMs for example.

Embodiments of the present invention may not use any real-time (measured) temperature of any component.

Below examples of LLLs are given that are calculated.

(1) Grid inverter current. It may be managed with an I2t-based calculation and its corresponding parametrization (Iinst, Imax, etc). As grid inverter current only flows in converter components, external LLL are not used.
(2) Stator current. Ani2t algorithm with its corresponding parameters may be applied. The resulting LLLs may be combined with an external LLL supplied by subsystem 2.
(3) Rotor current. It may be calculated as function of system operation condition parameters like rotor speed, grid frequency and cooling water temperature. It may be combined with external LLL.
(4) Grid and rotor inverter voltages. They may be calculated with DC-link voltage limit and some dynamic corrections to avoid converter current controller saturation. No external LLL is used.

When the low-level limitation is calculated in dependence of at least one system operation condition parameter, also calculation of the high-level limitation may be performed depending on the actual operation condition.

According to an embodiment of the present invention, the high-level limitation includes at least one of: a maximum stator active power, a maximum line active power and/or a maximum torque, a maximum stator capacitive reactive power, a maximum stator inductive reactive power, a maximum grid converter capacitive reactive power, a maximum grid converter inductive reactive power, wherein the high-level limitation relates in particular to a limit value of a high-level operational parameter which is calculable from at least one low-level operational parameter and at least one system operation condition parameter.

The method may be configured to calculate one or more of the above high-level limitations. The active power as an example of a high-level operational parameter may be calculated from the product of the current and the voltage as examples of low-level operational parameters. Thereby, relevant limitations of relevant high-level operational parameters may be derivable.

According to an embodiment of the present invention, the system operating condition parameter comprises at least one value of at least one of the following: a utility grid voltage and/or frequency; a rotor speed; an ambient temperature; a cooling water temperature. Other parameters may be comprised in the system operating condition parameters.

System operating condition variables may be external variables that are not controlled and, in most cases, they are unsensitive to the operation of the system.

According to an embodiment of the present invention, the method further comprises evaluating the low-level limitation of the system for plural operating conditions and/or for the current operating condition, to derive the high-level limitation; wherein evaluating the low-level limitation includes to determine at least one relationship comprising at least one of: a relationship between rotational speed and torque; a relationship between rotational speed and active power; a relationship between rotational speed and reactive power; the method further comprising: calculating the high-level limitation further based on the at least one relationship.

According to an embodiment of the present invention, the system includes at least one of: a rotor side converter electrically coupled to the rotor of the DFIM; a grid side converter electrically coupled to the utility grid; a DC link coupled between the rotor side converter and the grid side converter; a controller connected to control the rotor side converter and/or the grid side converter and in particular configured to carry out the method.

Thereby, a conventionally known electrical power generation system may be supported. The controller may be configured to supply control signals, such as one or more power references or voltage references to the rotor side converter and/or the grid side converter.

According to an embodiment of the present invention, the method includes to execute a power surfing algorithm to obtain the high-level limitation, the power surfing algorithm including plural calculation blocks comprising at least one of: a preconditioning block; a state machine block; a phasor system block; a positive sequence admittance block; an electric limit block; a maximum active quantity calculation block; a maximum reactive power calculation block; a limiting variables coder block.

The power surfing algorithm may conventionally be not known. At least, the electric limit block and/or the maximum active quantity calculation block and/or the maximum reactive power calculation block may conventionally not be known. Thereby, calculation of the high-level limitation may be improved, in particular considering the actual operating condition. This may be related to incremental calculation.

According to an embodiment of the present invention, the electric limit block is configured to provide the low-level limitation in dependence of the at least one system operation condition parameter, in particular grid voltage, grid frequency and/or rotor speed, from at least one of: at least one external low-level limitation; maximum DC-link voltage; a temperature and/or an ambient temperature and/or cooling water temperature of the component under consideration, in particular a converter.

According to an embodiment of the present invention, the electric limit block is configured to perform an I2t-algorithm in order to calculate, in particular for the actual operation condition, a maximum current (e.g. I_max) as low-level limitation, in particular based on at least one of: a maximum continuous RMS or thermal RMS current and/or a maximum instantaneous current as external low-level limitation; and a measured actual current.

According to this embodiment, the integral of the square of the current over a given time interval is calculated or computed. Thereby, the energy, in particular thermal energy, experienced by the component under consideration may be estimated. From this evaluation, the maximum current for the actual operating condition may be calculable. In turn, the high-level limitation may then be calculated at least partly based on the maximum current as a low-level limitation.

According to an embodiment of the present invention, the maximum active quantity calculation block is configured to calculate, as high-level limitation, the maximum stator active power and/or the maximum total active power and/or maximum total torque based on at least one of, in particular measured: an actual stator active power; an actual total active power; an actual total torque; an actual current (x); an actual voltage; machine admittances; GSC filter admittances; at least one low-level limitation (X_max), in particular current limitation.

Admittance is the physical magnitude that relates voltage with current. Therefore, the admittance is the inverse of the impedance and its unit is ohm^-1.

According to an embodiment of the present invention, the maximum active quantity calculation block and/or the maximum reactive power calculation block is configured to calculate the high-level limitation (e.g. P^inc_max) by incremental calculation in dependence of: a measured value (e.g. P_meas) of a high-level system operation condition parameter; a measured value (X_PH) of a low-level system operational parameter; a low-level limitation (e.g. X max) relating to a limitation of the low-level system operational parameter; a model (e.g. f^) for the relationship between the high-level operational parameter and the low-level operational parameter.

The incremental calculation may utilize measurement values related to the actual operating condition which may for example be defined by the measurement value of the high-level system operational parameter and the measurement value of a low-level system operational parameter. The high-level system operational parameter may for example be or comprise the active and/or reactive power and the low-level system operational parameter may for example relate to the measured current. The model for the relationship between the high-level system operational parameter and the low-level system operational parameter may for example be given as a mathematical function, in particular a linear function. The model may be derived by theoretical considerations. The high-level limitation may for example be obtained as a sum of the model evaluated at the difference between the low-level limitation and the actual low-level operational parameter added by the measurement value of the high-level operational parameter. Thereby, inaccuracies or errors in the model may be accounted for and may at least partly be corrected or at least diminished.

In a generic electric drive that can work as a motor and generator, there may be a maximum active quantity limit (generator) and a minimum active quantity limit (motor). When working as a motor, the incremental calculation may be used for the motor limit and the absolute calculation for the generator limit. When working as a generator, the opposite applies, i.e. incremental calculation may be applied for the generator limit and the absolute calculation may be applied for the motor limit.

According to an embodiment of the present invention, the maximum active quantity calculation block is configured to employ the incremental calculation or an absolute calculation in dependence of whether the system is operated in motor mode or generator mode, and/or wherein the maximum reactive power calculation block is configured to employ the incremental calculation or an absolute calculation in dependence of whether the system is operated to provide inductive or capacitive reactive power.

According to an embodiment it is provided an arrangement for determining at least one high-level limitation of a system including a doubly fed induction machine, the arrangement comprising: an input module configured to receive at least one system operation condition parameter related to the actual operation condition; a calculation module configured to calculate the high-level limitation based on at least one low-level limitation of components of the system and the system operation condition parameter.

It should be understood, that features, individually or in any combination, disclosed, explained or described with respect to a method of determining at least one high-level limitation of a system, may, individually or in any combination, also be applied or provided for an arrangement for determining at least one high-level limitation, according to embodiments of the present invention and vice versa.

The arrangement may for example be a portion of a controller of the system.

According to an embodiment of the present invention it is provided a wind turbine, including: a blade rotor at which plural rotor blades are mounted; a doubly fed induction machine having a rotor coupled to the blade rotor; and an arrangement for determining at least one high-level limitation of a system including the doubly fed induction machine according to the preceding embodiment.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

Embodiments of the present invention are now described with reference to the accompanying drawings. The invention is not restricted to the illustrated or described embodiments.

Fig. 1 schematically illustrates a wind turbine, as an example of an electric drive system including a doubly fed induction machine, according to an embodiment of the present invention comprising an arrangement for determining at least one high-level limitation according to an embodiment of the present invention;

Fig. 2 schematically illustrates an arrangement for determining at least one high-level limitation according to an embodiment of the present invention which may for example be comprised within the wind turbine illustrated in Fig. 1;

Fig. 3 schematically illustrates a power surfing algorithm module according to an embodiment of the present invention which may for example be comprised within the arrangement illustrated in Fig. 2;

Fig. 4 illustrates diagrams for explaining calculations being performed by one of the modules depicted in Fig. 3;

Fig. 5 illustrates an incremental calculation method as employed in one of the modules depicted in Fig. 3;

Fig. 6 illustrates a hysteresis logic for obtaining a mode parameter as employed in embodiments of the present invention;

Fig. 7 schematically illustrates a portion of a logic or calculation module for calculating a maximum active quantity as employed in embodiments of the present invention; and

Fig. 8 illustrates an example of a hysteresis logic for obtaining a mode quantity as employed in embodiments of the present invention.

Detailed Description

The illustration in the drawings is in schematic form. It is noted that in different figures, elements similar or identical in structure and/or function are provided with the same reference signs or with reference signs, which differ only within the first digit. A description of an element not described in one embodiment may be taken from a description of this element with respect to another embodiment.

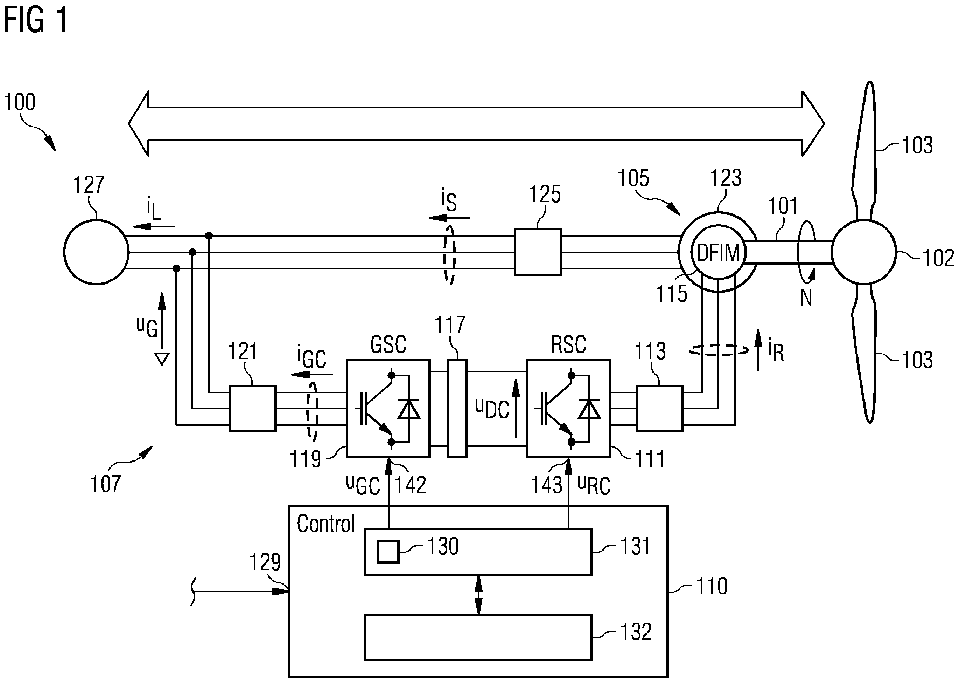

The wind turbine 100 schematically illustrated in **Fig.** 1 comprises a blade rotor 101, a mechanical system 102 and plural rotor blades 103 coupled to the rotor 101 via the mechanical system 102 (that may include a gear box e.g.). The wind turbine 100 further includes a doubly fed induction machine (DFIM) 105 having a rotor 115 coupled to the blade rotor 101 and having a stator 123. Furthermore, the wind turbine 100 comprises an arrangement 110 for determining at least one high-level limitation of a drive system 107 including the doubly fed induction machine 105.

In the embodiment illustrated in Fig. 1, the drive system 107 comprises, beside the DFIM 105, a rotor side converter portion 111 which is electrically connected, via a rotor filter 113 to rotor windings of the rotor 115 of the DFIM. The system 107 further comprises a DC link 117 which is connected to DC output terminals of the rotor side converter 111. In particular, the rotor side converter 111 is connected to rotor windings of the rotor 115 of the DFIM 105. The rotor side converter 111 may receive/transmit an AC power from/to the rotor windings of the rotor 115 of the DFIM 105 depending on the generator slip and if the system is working in motoring or generating mode. The rotor side converter 111 outputs a DC power to the DC link 117.

The DC link voltage may be generated prior to the operation with the DFIM 105. A process usually known as precharge may use the diodes of the grid side inverter to charge the bus. Then, the DC-link voltage may be kept at a certain level thanks to energy balance between the power transferred through both rotor side and grid side converters. The regulator in the grid side converter portion 119 may keep this energy balance.

The grid side converter portion 119 which is connected to the DC terminals of the DC link 117. The grid side converter portion 119 is configured as a DC-AC converter which outputs via a grid filter 121 a fixed frequency AC power.

The DFIM 105 further comprises a stator portion 123 having stator windings, wherein the stator windings are connected via a stator switch gear 125 to the output terminals of the grid side converter 121. The combined AC power is provided to an electric grid 127. The stator current is denoted as i_S and the grid side converter current is denoted as i_GC in Fig. 1. The total output current is denoted i_L.

The electrical system 107 may also be referred to as an electric drive. The electrical system 107 is controlled by the arrangement 110 via control signals 142, 143 for example indicating reference or modulating voltage or firing signals. In the present embodiment, the arrangement 110 outputs reference values regarding the voltage, namely the grid side converter voltage reference u_GC and the rotor side converter voltage reference u_RC.

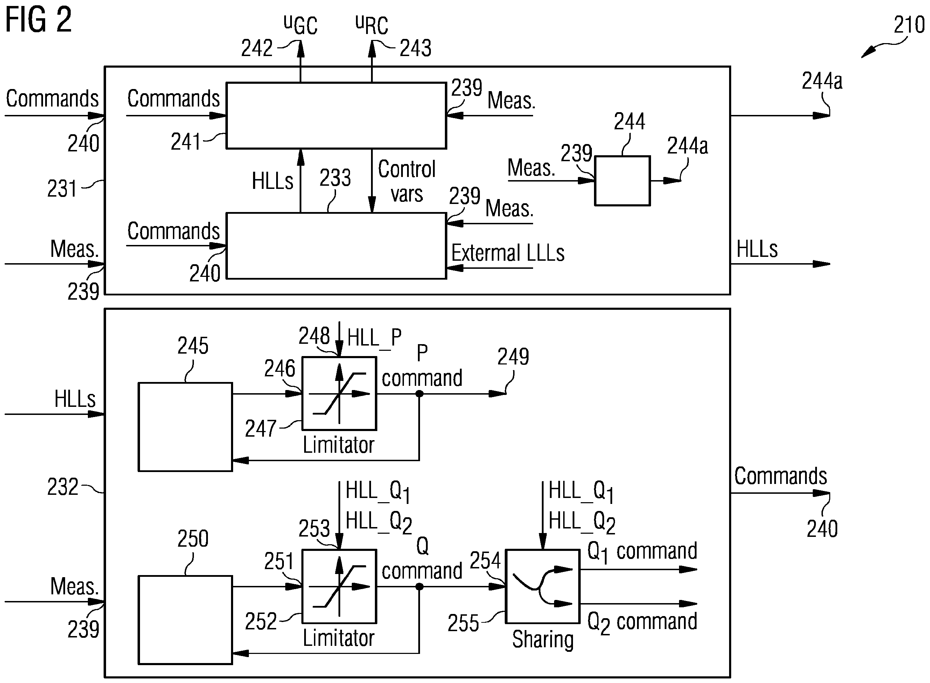

The arrangement 110 comprises an input module or terminal configured to receive at least one system operation condition parameter 129 which is related to the actual operation condition of the electrical system 107. The arrangement 110 further comprises a calculation module 130 which is configured to calculate a high-level limitation (also denoted HLL in Fig. 2 for example) based on at least one low-level limitation (also denoted as LLL in Fig. 2) of a component of the system and the system operation condition parameter 129.

The arrangement 110 comprises the sub-system 1 (reference sign 131) as well as a sub-system 2 (reference sign 132). In other embodiments, the arrangement may comprise less or more sub-systems or modules. In the present embodiment, the calculation module 130 is implemented in the sub-system 1 (reference sign 131). In other embodiments, the calculation module 130 may also be implemented in the sub-system 2 (reference sign 132).

The following explanations describe some detailed features of embodiments of the present invention which however are not mandatory:
An electric drive is a system which transforms mechanic energy into electric energy (generating) and/or vice versa (motoring). The drive is mainly composed by an electric machine and a power converter. Electric vehicle, pumps, mining and wind power are just some of the industrial applications of electric drives. There are multiple categories for classifying them.

Fig. 1 contains a scheme of an electric drive 107 based on a three-phase doubly-fed induction machine 105 with a partial power converter. In Fig. 1 the mechanical system 102 is configured as for a wind turbine, but may be adapted e.g. as for gas turbine or for steam turbine other.

The electric drive is governed through the voltage commands applied to the grid-side converter (GSC, 119) and the rotorside converter (RSC, 111). These voltages, in turn, are obtained with the control logic. In this example, the control block (or arrangement for calculating HLL) 110 is divided in two subsystems.

- Subsystem 2 (e.g. 131 in Fig. 1) is the main governor of the electric drive. It manages high-order variables, like rotor speed, active and reactive powers and torque by sending the corresponding commands to subsystem 1. It has lower computational demands than subsystem 1.
- The goal of subsystem 1 is satisfying the commands sent by system 2. It implements the controllers that regulates electromagnetic variables like current controllers, active and reactive power controllers, magnetic field controllers, electromagnetic torque controller, etc. As electromagnetic variables have high bandwidth, the sampling time to execute control routines should be small enough. It also performs pulse-width modulations (PWM). Subsystem 1 can report to subsystem 2 some online information.

Subsystem 1 and 2 can be implemented in the same device or in two separate devices with the corresponding communication resources.

Some useful definitions and explanations are provided below:

- The ranges of operation or system capacities of the electric drive are usually described by one or several of the following:

    o a speed-torque curve (T-N curve)
    o speed-active power curve (P-N curve)
    o speed-reactive power curve (Q-N curve).

- These curves are obtained by evaluating all the low-level limitations (LLLs) of the system in each possible operating condition.
- LLLs refer to the intrinsic constrains of each element of the drive e.g. maximum stator current or maximum DC-link voltage.
- The ranges of operation or system capacities can be also denominated as high-level limitations (HLLs) as the drive is usually governed by outer controllers. Hence, HLLs are maximum active and reactive powers, torque, etc.
- System operating conditions are the rest of variables which affect HLLs: e.g. grid voltage and frequency, rotor speed, ambient temperature or cooling water temperature
- LLLs may also depend on the system conditions e.g. maximum rotor current can be expressed as function of machine slip.
- It is considered to distinguish between transient capacities and steady-state (continuous) capacities. The former is understood for a short-period of time (e.g. 5s) where a component can supply a surplus, while the last are intended for an unbounded period of time. The internal temperature of each component is the reason behind this. When the temperature is low, a higher current can be flown through the component. Due to its dissipative properties, this high current produces higher losses, which are transformed in heat, raising component temperature. When the temperature is high, the current should be lowered in order not to reach the limit temperature otherwise component rupture or failure are expected.
- Consequently, the internal temperature of a component is a very useful input for calculating capacities, it may be in fact aggregated to the system conditions. However, it is impossible to measure the internal temperatures of all-important components. Besides, temperature sensors have limited bandwidth (delayed response) and tolerance error which constrain its use in some applications. A first option is to estimate the temperature with a thermal model. A second option is, instead of using the temperature, employing a I2t method which provides dynamic capabilities distinguishing between transient and continuous capabilities. If I2t parameter is low enough, the component can deliver its maximum instantons limit current. If I2t is high, the thermal current limit applies. The thermal current is the maximum current a component can continuously deliver.

Real-time information of the maximum capabilities is useful for the system governing the electric drive to:

- Command operating points within limits, preventing unintentional disconnection, stress or damage of components.
- Improve performance of the drive with the possibility of extracting the maximum capacity in each condition and taking advance of every corner.
- Efficient reactive power sharing between stator and grid converter.
- It assists the use of anti-windups in outer controllers.

The invention being disclosed here is focused on variablespeed doubly feed induction machine (DFIM) drives with partial load power converter. Embodiments provide a method for online calculating a maximum active quantity (to be chosen from stator active power, total active power or machine torque), the maximum stator reactive power and the maximum grid converter reactive power given the system LLLs and system conditions.

The low-level limitation is denoted in the figures with reference sign LLL and the high-level limitation is denoted with reference sign HLL in the figures.

**Fig. 2** illustrates the arrangement 210 for determining at least one high-level limitation of an electrical system in more detail. The arrangement 210 may, according to one embodiment, replace the arrangement 110 illustrated in Fig. 1. The arrangement 210 comprises the sub-system one 231 and the subsystem two 232. The sub-system one comprises a module 233 which is configured to perform a power surfing algorithm. The module 233 may be considered as an implementation of the calculator 130 illustrated in Fig. 1. The power surfing module 233 receives at inputs measurement values 239 regarding the operational condition of the electrical system (for example electrical system 207 illustrated in Fig. 1). Furthermore, the power surfing module 233 receives external low-level limitations as inputs and further receives commands 240 which may be output by the sub-system two (reference sign 232). The commands 240 may indicate control signals for the electrical system. The power surfing module 233 further receives control variables from a control module 241 which is configured to control the grid side converter and the rotor side converter by the control signals 242, 243 indicating voltage references. Also, the control module 241 receives commands 240 as well as measurement values 239 relating to the operational condition. An alarm module 244 receives also measurement values 239 and outputs alarm signals 244a.

The sub-system two (reference sign 232) receives the HLLs which are output by the sub-system one as well as measurement values 239. The sub-system two comprises a P command calculator block 245 which outputs an unlimited power command 246 which is provided to a limitation module 247. The limitation module 247 receives a high-level limitation 248 regarding the power and outputs a power command 249.

The sub-system two further comprises a reactive power command calculator block 250 which outputs an unlimited reactive power command 251 to a limitation block 252. The limitation block receives high-level limitations 253 regarding reactive power and outputs a reactive power command 254 which is provided to a sharing module 255 which shares the reactive power to be generated by the stator or the rotor of the DFIM.

The invention being disclosed here is focused on variablespeed DFIM drives with partial load power converter. A real-time algorithm, named as Power Surfing Algorithm (PSA), is implemented in subsystem one (i.e. CCU) aimed to calculate HLLs as function of LLLs and system conditions. PSA substitutes the LUT implemented in subsystem two. HLLs must be sent to subsystem two (see Fig. 2).

During normal conditions (voltage is within range, so no fault is detected), PSA 233 calculates:

- the maximum stator active power, maximum line active power and/or maximum torque.
- maximum stator capacitive reactive power, maximum stator inductive reactive power, maximum grid converter capacitive reactive power and maximum grid converter inductive reactive power

as function of system conditions as:

- rotor speed,
- grid voltage,
- grid frequency,
- ambient temperature or cooling water temperature.
- etc.

and system (low-level) limitations as:

- maximum stator current,
- maximum rotor current,
- maximum line current,
- maximum converter current,
- maximum DC-link voltage,
- etc.

System conditions are time-variant and are usually measured, e.g. measurement 239. System limitations can be fixed or time-variant as some depends on other variables such as system conditions and time.

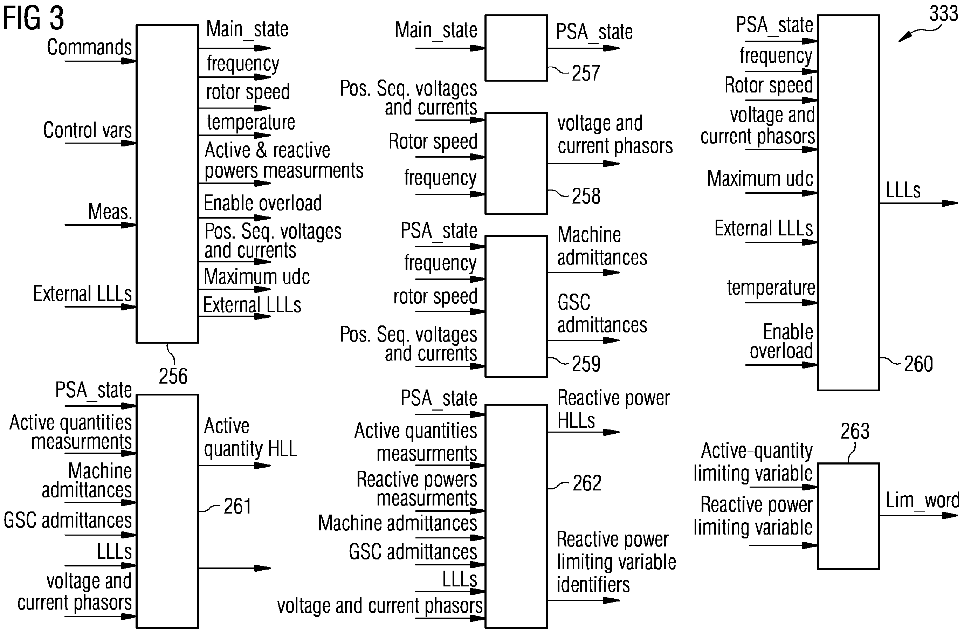

In Fig. 3, the power surfing module 233 illustrated in Fig. 2 is illustrated more detailed. The power surfing module 333 illustrated in Fig. 3 comprises a pre-conditioning block 256, a PSA state machine 257, a phasor system block 258, a positive sequence admittances module 259, an electric limit block 260, a maximum active quantity calculation block 261, a maximum reactive power calculation block 262 and a limiting variables coder 263, which modules may individually or in any combination be present within the power surfing module according to embodiments of the present invention. The different modules receive inputs as indicated in Fig. 3 and generate outputs as indicated in Fig. 3.

Following the scheme in Fig. 3, the PSA 333 can be divided in the following blocks.

- **Pre-conditioning block 256:** this optional block has the purpose of adapting the input signals to the PSA. As the PSA might be computed with a lower sampling frequency than the rest blocks (e.g. control algorithms), using low-pass filters to reduce the bandwidth of signals before the down sampling is convenient to avoid aliasing.

- **PSA state machine 257:** the PSA is equipped with its own state machine, which is totally synchronized with the converter main state machine, but it may be simpler. In one embodiment of this invention, the PSA state machine contains four states.

    ◦ **PSA_OFF:** During this state, the converter is not in operation. PSA is hence not being executed.
    ◦ **PSA_GCONV:** The GSC is active, but the RSC is not active, or the machine is not already connected to the grid. Only calculations relating to GSC capacities are done, calculations regarding the stator side are not worked out.
    ◦ **PSA_B2B:** The machine is connected to the grid. Both GSC and machine capacities are being calculated.
    ◦ **PSA FAULT:** during a fault (e.g. an undervoltage or overvoltage event or abrupt voltage change), reactive power HLLs are not necessary as subsystem 2 does not manage reactive current injection during faults, it is done internally in subsystem 1. Active quantity HLL is still being regulated by subsystem 2, but a specific calculation is carried out of the scope of PSA. Neither GSC nor machine capacities and intermediate variables are calculated. Last valid calculation is frozen. This state covers the fault and the recovery time after fault.

- **Phasor system block 258:** this block creates a phasor system centered at the positive sequence with all currents and voltages, as a unified reference frame. The block corrects any possible phase displacement between machine and GSC variables and counteracts possible phase-delays due to filtering. The outputs of this block are dynamic phasors like grid voltage $u_G$, rotor voltage $u_R$, GSC voltage $u_{GC}$, stator current $i_S$, rotor current $i_R$ and GSC current $i_{GC}$. As dynamic phasors, there are mathematically with the complex numbers. Practically, there are represented in the digital device as a vector of two floats ($\mathbb{R}^2$).

- **Positive sequence admittances block 259:** this block obtains the admittances of the machine and the GSC filter particularized for the positive sequence of the fundamental frequency. Admittances relate stator, rotor and GSC currents with grid voltage, rotor voltage and GSC voltage phasors as in the following expressions in (1). Machine admittances are $G_{SS}$, $G_{RS}$, $G_{RS}$ and $G_{RR}$, GSC filter admittances are $Y_G$ and $Y_{GC}$. Admittances belongs to C or $\mathbb{R}^2$. One skilled in the state of the art would be capable of obtaining such admittances. The inputs of the block are the PSA_state, grid frequency, rotor speed and phasor measurement. Parameters like machine leakage inductances, resistors, magnetizing inductance curve and GSC filter inductors, resistors and capacitors are used in this block as well. The outputs are generalized as machine and GSC admittances in Fig. 3.

$$i_S = G_{SS} \cdot u_G + G_{RS} \cdot u_R$$
$$i_R = G_{SR} \cdot u_G + G_{RR} \cdot u_R$$
$$i_{GC} = Y_{GG} \cdot u_G + Y_{GC} \cdot u_{GC}$$

$$(1)$$

- **Electric limits block 260:** This block provides the LLLs of the system. LLLs can include maximum stator current, maximum rotor current, maximum GSC current, maximum rotor voltage and maximum GSC voltage. The inputs of this block are:

    ◦ **PSA_state:** depending of the state, some LLLs are not calculated.
    ◦ **grid frequency** and **rotor speed:** with grid frequency and rotor speed, the machine slip is defined and so it is the electric frequency of rotor currents. The maximum RSC current depends of this rotor frequency. A LUT or a mathematical expression can be implemented to do so. Maximum stator and rotor currents can be also a function of rotor speed in those DFIMs with passive air-cooling system (representing a not considered dependency until now).
    ◦ previously calculated **voltage** and current **phasors**
    ◦ **maximum** DC-link voltage (udc) sent from RSC & GSC controller: the maximum udc voltage is usually fixed, but sometimes it is interesting to further constrain its value below physical limitation after grid disturbances. As a time, variable, it has to be informed to the PSA.
    ◦ external LLLs can include machine's maximum stator current, machine's maximum rotor current or transformer current or other electrical component not included in converter's cabinets. This way, if desired, subsystem 2 can online inform PSA about other components limitations. In case of rotor current, both RSC and machine contain their corresponding limits. The PSA logic selects the most constraining one.
    ◦ temperature: it is the measured ambient temperature or cooling water temperature. In this case, temperature is used to adapt maximum RSC current. Generally speaking, the lower the temperature, the greater current the RSC can deliver.

◦ Enable overload: this signal can enable overload capabilities in machine and GSC current. If the signal is OFF, LLLs like maximum stator and GSC current will be fixed to the thermal limit. If the signal is ON, the PSA obtains dynamic LLLs which are based on transient and continuous limits.

Maximum RSC and GSC voltages are obtained as function of maximum udc. The calculation might include steady-state and transient corrections based on the dynamic of rotor and GSC voltage phasors.

As explained before, maximum RSC current takes into account both DFIM limitation and converter limitation, which in turn calculated as function of input cooling water temperature and machine slip.

Maximum stator and GSC currents depend on whether the parameter enable_overload is OFF or ON. When OFF, these values are fixed to the thermal limit. When ON, a I2t-based logic is implemented aimed to provide overload capacity in GSC and stator. The following lines describe the proposed I2t-based logic, applicable to stator maximum current and GSC maximum current calculation.

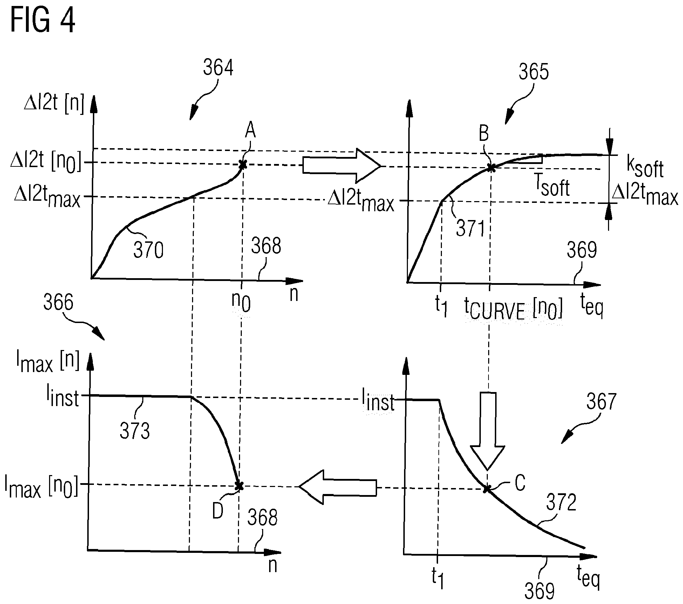

Fig. 4 illustrates graphs for explanation for a I2t based logic which may be executed in the electric limit block 260 illustrated in Fig. 3. Fig. 4 comprises the plots 364, 365, 366, 367 wherein the abscissas 368 indicate the sample number and the abscissas 369 indicate the time. The curve 370 indicates the delta I2t value, i.e. the integral of the square of the difference between the measured current magnitude and the corresponding thermal value integrated over a particular index interval or time interval. The curve 371 in plot 365 indicates an auxiliary curve utilized or derived in embodiments according to the present invention. The curve 372 in plot 367 may indicate a reference curve provided by a manufacturer for example of a converter. In a successive inference, the value of the I2t at point A is transformed to a point B on curve 371 from which it is transferred to a point C on the curve 372. Therefrom, the corresponding maximum current I_max is derived by transformation to point D on the curve 373 in the plot 366. Thereby, the limitation I_max may represent a low-level limitation.

I2t-based logic for providing overload capacities (inside electric Limits block 260 in Fig. 3) is further described below with reference to Fig. 4:

The logic returns the signal $I_{max}$. The algorithm needs the following information to be defined, either as a parameter or as an input (for both stator and GSC):

◦ $I_{inst}$: maximum instantaneous RMS current.
◦ $t_1$: time $I_{inst}$ can be maintained.
◦ $I_{th}$: maximum continuous RMS or thermal RMS current
◦ $k_{SOFT}$: defines an extended proportion of $\Delta I2t_{max}$ for soft saturation of Imax
◦ $\tau_{SOFT}$: time-constant for extended range $\Delta I2t_{max} \cdot k_{SOFT}$.
◦ $|I[n]|$: RMS phasor magnitude of the measured current (stator or GSC). The argument n stands for the sample number, in discrete-time notation. Its continuous-time equivalent is $n \cdot T_S$ being $T_S$ the sampling time.

In one exemplary embodiment, the proposed I2t-based logic works with differential values: $\Delta I2t$. The signal $\Delta I2t$ is calculated with an integrator of the quadratic difference between the RMS phasor magnitude $|I[n]|$ and the thermal current $I_{th}$. If the result is negative, it is down limited to 0. Then, a curve $\Delta I2t=f_1(t_{ea})$ is defined. It relates $\Delta I2t$ with an equivalent time $t_{ea}$. The function $f_1$ is configured with $\Delta I2t_{max}$ (which in turn depends of $I_{inst}$, $I_{thermal}$ and $t_1$), $k_{soft}$, $\tau_{soft}$ and $t_1$. The inverse of function $f_1$, $f_1^{-1}$, is used to obtain a time $t_{CURVE} = f_1^{-1}(\Delta I2t)$. Finally, a second function $f_2$ calculates the ouput signal $I_{max} = f_2(t_{CURVE})$. Function $f_2$ is tuned with $I_{inst}$, $I_{thermal}$ and $t_1$. $\Delta I2t$ is calculated as function of $|I|$ and then, following the described process from figure a) to d), the logic returns $I_{max}$. The variable $n_0$ expresses the current time instant.

In the following, the maximum active quantity calculation block 261 of Fig. 3 is described in more detail:

The Maximum active quantity calculation block 261 provides HLLs, in particular the maximum positive and minimum negative values of the selected active quantity, which can be, depending on the controlled variable in each application, the stator active power, the total active power or torque. In this case, positive stands for generating mode and negative for motoring mode.

Contrary to reactive power, where machine and GSC can independently inject a reactive power themselves, the active power or torque is linked to the whole system. There is just one degree of freedom: once an active quantity is fixed, the rest of active quantities are also fixed. For example, if the stator active power is fixed to 3 MW, then given a machine slip, the total active power, the GSC active power, rotor active power and the torque will be also determined. The reason resides on the DFIM nature.

Unless PSA_state is PSA B2B, the active quantity is 0. In PSA_FAULT, the calculation is not executed. As shown in Fig. 3, the inputs of this block are the PSA_state, active quantity measurements as stator active power, total active power or torque, machine admittances, GSC filter admittances, LLLs and voltage and current phasors. Besides, it is important to highlight the parameter $PQ_{priority}$. If this parameter is 0, then active quantity has priority against reactive power, so active quantity can take advance of full LLLs if necessary. The remaining capacities up to reach LLLs, can then be employed for reactive power. On contrary, if $PQ_{priority}$ is 1, the reactive powers have priority.

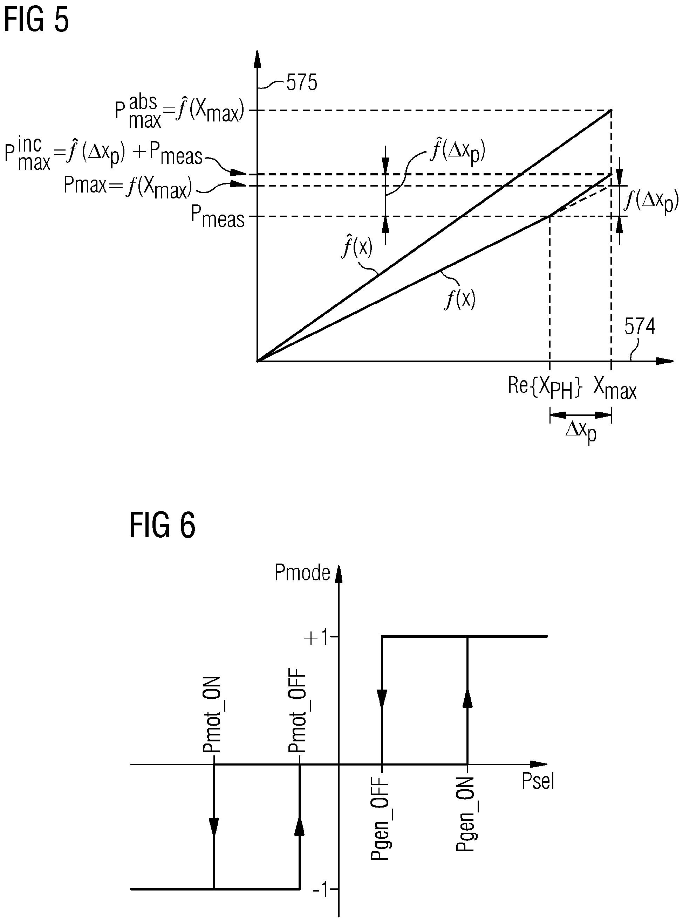

**Fig. 5** illustrates curves for explanation of an incremental calculation which may be performed by the maximum active quantity calculation block 261 illustrated in Fig. 3. On the abscissa 574, a low-level operational parameter X is indicated, which may for example be the current. On the ordinate 575, a high-level operational parameter is indicated, which may for example be the active power P. The curve f(x) represents the true (unknown) dependency of the operational parameter P from the low-level operational parameter x and the high-level. The function f^ represents a model for the relationship between the high-level system operation condition parameter and the low-level system operation condition parameter x. This model may not correctly or accurately reflect the true dependency. According to an embodiment of the present invention, the high-level limitation representing a maximum limit of the active power is calculated by the incremental calculation illustrated in Fig. 5.

The logic for obtaining the maximum active quantity might be based on an incremental calculation. Incremental calculation is described below and assisted by Fig. 5. Suppose that the active quantity P (power or torque) is dependent of the limiting variable x (voltage or current) following the function $f(x)$. The available model $\hat{f}(x)$ has an error compared with the real model $\hat{f}(x) \neq f(x)$. The limit of variable $x$ is $X_{max}$ (LLL). The current operating point is given by the pair ($X_{PH}$, $P_{meas}$), where $P_{meas}$ is measured from the real system and $X_{PH}$ is a complex number corresponding to the three-phase measurement of $x$. No measurement errors are assumed. If the PSA performs the estimation of $P_{max}$, the full error of $\hat{f}(x)$ will be transmitted to the result, getting $P_{max}^{abs}$. This is the absolute calculation. On contrary, the incremental calculation is assisted by the measure for avoiding any model uncertainty. In this exemplary description, the phasor system is aligned with the grid voltage, having the grid voltage no imaginary part. Then, real parts of current phasor contribute to active power or torque while imaginary parts contribute to reactive power. First of all, the available active margin $\Delta x_P$ is defined in equation (2). $PQ_{priority}$ establishes whether, within the available margin given by $X_{max}$, priority is given to the active quantity or the reactive quantity. The incremental $P_{max}^{inc}$ is worked out with $P_{meas}$ as an offset and using $\Delta x_P$ as input of $\hat{f}(x)$, getting $AP = \hat{f}(\Delta x_P)$ and $P_{max}^{inc} = P_{meas} + \Delta P$. Estimation $P_{max}^{inc}$ contains lower error as it is closer to real system capacity $P_{max}$. The incremental procedure, in the form described here, may be limited to linear expressions. Extra arrangements may be necessary in case of non-linear model. The incremental calculation is more effective as the working point is closer to the maximum capacities. Due to this reason, it is used for motoring limits when the system is acting as motor and it is used for generating mode when the system is acting as machine, otherwise the absolute calculation may be carried out.

$$\Delta x_P = \sqrt{X_{max}^2 - \text{PQ}_{priority} \cdot \text{Im}\{X_{PH}\}^2} - \text{Re}\{X_{PH}\} \qquad (2)$$

**Fig. 6** illustrates a hysteresis logic for obtaining the mode variable Pmode.

○ First, the measurement of the selected active quantity $P_{SEL}$ is used in a hysteresis logic to obtain the variable *Pmode*. It indicates whether the system is working as a motor, generator or none of them. This variable is after used to decide if incremental calculation must be used or not.

○ For each LLL (stator current, rotor current, GSC current, rotor voltage and GSC voltage), the algorithm calculates a $\Delta x_{PGEN}$ and $\Delta x_{PMOT}$ which will used to provide the maximum limits in machine and motor modes. The calculation employs the maximum value of the LLL, $PQ_{priority}$, *Pmode* and measured phasor, following equation (3).

$$\begin{cases} \Delta x_{PGEN} = \sqrt{X_{max}^2 - \text{PQ}_{priority} \cdot \text{Im}\{X_{PH}\}^2} - \dfrac{|Pmode|(1 + Pmode)}{2} \cdot \text{Re}\{X_{PH}\} \\[4mm] \Delta x_{PMOT} = -\sqrt{X_{max}^2 - \text{PQ}_{priority} \cdot \text{Im}\{X_{PH}\}^2} - \dfrac{|Pmode|(1 - Pmode)}{2} \cdot \text{Re}\{X_{PH}\} \end{cases} \qquad (3)$$

○ Then, local $\Delta P^x_{yGEN}$ and $\Delta P^x_{yMOT}$ values are obtained using the corresponding $\hat{f}^x_y(x)$. This function $\hat{f}^x_y(x)$ also depends on the voltage phasor and the calculated admittances. The superscript $x$ logically stands for the LLL and subscript y denotes the location of the resulting $\Delta P^x_y$. For example, when working with a DFIM LLL (i.e. maximum stator current, rotor current or rotor voltage), the resulting $\Delta P^x_S$ denotes the maximum stator active power or torque. On the other side, if the LLL is the maximum GSC current or voltage, then, $\Delta P^x_{GC}$ refers to the maximum GSC active power. One skilled in the state of the art would obtain the expressions of $\hat{f}^x_y(x)$ for each LLL.

○ After that, $P^x_{yGENmax} = P_{yGEN} + \Delta P^x_{yGEN}$ and $P^x_{yMOTmax} = P_{yMOT} + \Delta P^x_{yMOT}$ are obtained. $P_{yGEN}$ and $P_{yMOT}$ depends on the measure $P_y$ and $Pmode$:

$$\begin{cases} P_{yGEN} = \dfrac{|Pmode|(1 + Pmode)}{2} \cdot P_y \\ P_{yMOT} = \dfrac{|Pmode|(1 - Pmode)}{2} \cdot P_y \end{cases} \qquad (4)$$

○ Then, each $P^x_{yMOTmax}$ and $P^x_{yGENmax}$ should be transformed into their equivalent maximum active quantity $P^x_{SELGENmax}$ and $P^x_{SELMOTmax}$ if necessary. For example, if the selected maximum active quantity is the stator active power $P_{Smax}$, only the calculations belonging to GSC LLLs (i.e. maximum GSC current and voltage) need to be transformed: $P^{IGC}_{GCMOTmax} \rightarrow P^{IGC}_{SMOTmax}$, $P^{IGC}_{GCGENmax} \rightarrow P^{IGC}_{SGENmax}$ and $P^{UGC}_{GCMOTmax} \rightarrow P^{UGC}_{SMOTmax}$, $P^{UGC}_{GCGENmax} \rightarrow P^{UGC}_{SGENmax}$. One skilled in the state of the art would know how to proceed with these transformations working with the power balances and system admittances.

○ Finally, the algorithm returns the most restricting values $P_{SELGENmax}$ and $P_{SELMOTmax}$. In the example: $P_{SGENmax} = \min\{P^{IS}_{SGENmax}, P^{IR}_{SGENmax}, P^{URC}_{SGENmax}, P^{IGC}_{SGENmax}, P^{UGC}_{SGENmax}\}$. As shown in Fig. 3, this block also returns an identifier of the LLL that constrains $P_{SELCENmax}$ and $P_{SELMOTmax}$.

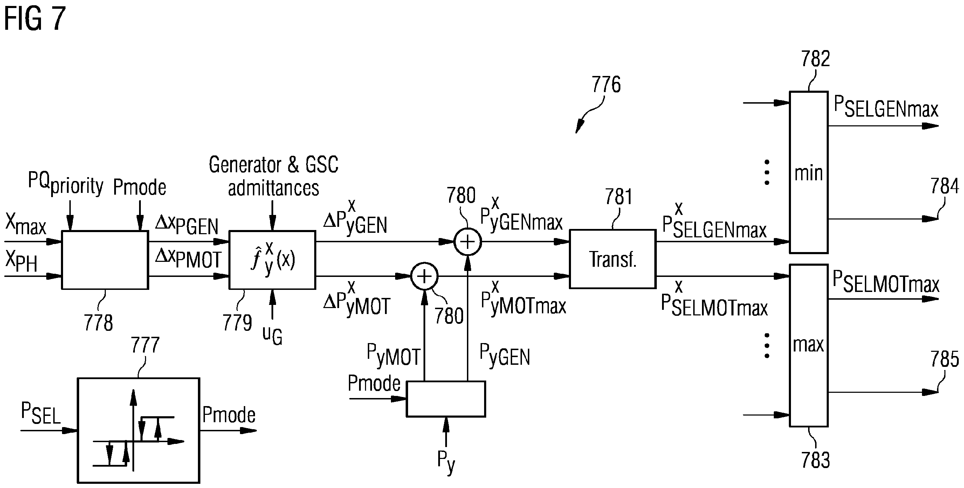

**Fig. 7** schematically illustrates an example of a proposed logic for calculating the maximum active quantity. The logic 776 may be implemented within the maximum active quantity calculation block 261 illustrated in Fig. 3. The hysteresis logic illustrated in Fig. 6 may be utilized as a hysteresis logic module 777 in the logic 776 illustrated in Fig. 7. In a calculation model 778, the indicated deviations are calculated based on the inputs as indicated in Fig. 7. Then, the model function is applied to obtain respective deviations of the high-level operational parameter, in particular the power P as indicated in Fig. 7. Using addition elements 780, other power quantities are added and the sums are provided by a transformation module 781 which outputs plural quantities which are provided by minimum determination unit 782 or maximum determination unit 783. The minimum/maximum determination modules 782, 783 output the positive active quantity limiting variable identifier 784 or the negative active quantity limiting variable identifier 785 which may represent a high-level limitation.

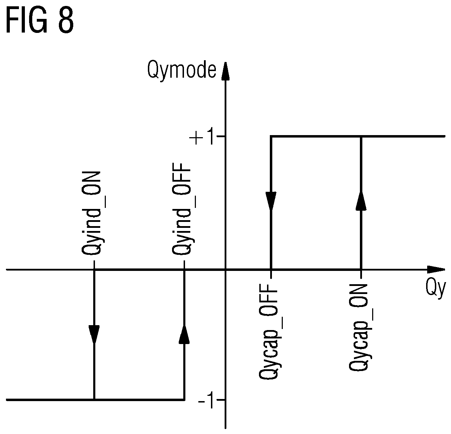

**Fig. 8** illustrates an example of a hysteresis logic for obtaining reactive power mode according to an embodiment of the present invention. In the following, the maximum reactive power calculation block 262 illustrated in Fig. 3 is described.

The Maximum reactive power calculation block 262 works out the maximum stator capacitive reactive power $Q_{Scapmax}$, the maximum stator inductive reactive power $Q_{Sindmax}$, the maximum GSC capacitive reactive power $Q_{GCcapmax}$ and the maximum GSC inductive reactive power $Q_{GCindmax}$. The process to obtain the limits for the stator reactive power and the limits for the GSC reactive power is like the one described for the active quantity. There may be two variables for indicating the calculation mode (incremental or absolute): QSmode and QGCmode. Besides, contrary to the active quantity case, some LLLs only affects to the stator side and the rest only affects to the GSC. For example, rotor current, stator current and rotor voltage can limit the injection of reactive power through the stator of the machine, but they do not affect the injection of reactive power in the GSC. Analogously, GSC current and GSC voltage do not limit the machine reactive power but they do in the GSC. Equation (5) indicates how to calculate $\Delta x_{OCAP}$ and $\Delta x_{OIND}$.

$$\begin{cases} \Delta x_{QCAP} = \sqrt{X_{max}^2 - \left(1 - PQ_{priority}\right) \cdot Re\{X_{PH}\}^2} - \dfrac{|Qymode|(1 + Qymode)}{2} \cdot Im\{X_{PH}\} \\[3mm] \Delta x_{QIND} = -\sqrt{X_{max}^2 - \left(1 - PQ_{priority}\right) \cdot Re\{X_{PH}\}^2} - \dfrac{|Qymode|(1 + Qymode)}{2} \cdot Im\{X_{PH}\} \end{cases} \qquad (5)$$

The Limiting variables coder 263 in Fig. 3 codifies all the identifier of the limiting variables to inform subsystem two 232 illustrated in Fig. 2.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method of determining at least one high-level limitation (HLL), in particular regarding transient and steady state limitations for both active and reactive quantities, of a system (107) including a doubly fed induction machine (105), the method comprising:

   receiving at least one system operation condition parameter (129) related to the actual operation condition;
   calculating the high-level limitation (HLL) based on at least one low-level limitation (LLL) of at least one component of the system and the system operation condition parameter (129),
   wherein the method is particular performed, while the system is in operation.

2. Method according to the preceding claim, wherein the low-level limitation (LLL) includes at least one constraint of at least one component (105, 111, 117, 119, 121) of the system (107), in particular including at least one of:

   a maximum stator current,
   a maximum rotor current,
   a maximum line current,
   a maximum converter current,
   a maximum DC-link voltage.

3. Method according to one of the preceding claims,
   wherein the low-level limitation is given depending on or independent of at least one system operation condition parameter,
   wherein the low-level limitation relates in particular to a limit value of a low-level operational parameter.

4. Method according to one of the preceding claims, wherein the high-level limitation (HLL) includes at least one:

   a maximum stator active power,
   a maximum line active power and/or
   a maximum torque,
   a maximum stator capacitive reactive power,
   a maximum stator inductive reactive power,
   a maximum grid converter capacitive reactive power,
   a maximum grid converter inductive reactive power,

   wherein the high-level limitation relates in particular to a limit value of a high-level operational parameter which is calculable from at least one low-level operational parameter.

5. Method according to one of the preceding claims, wherein the system operating condition parameter (129) comprise at least one value of at least one of the following:

a utility grid voltage and/or frequency;
a rotor speed;
an ambient temperature;
a cooling water temperature.

6. Method according to one of the preceding claims, further comprising:

evaluating the low-level limitation (LLL) of the system for plural operating conditions and/or for the current operating condition, to derive the high-level limitation (HLL); wherein evaluating the low-level limitation includes to determine at least one relationship comprising at least one of:
a relationship between rotational speed, grid voltage, grid frequency, LLL and torque;
a relationship between rotational speed, grid voltage, grid frequency, LLL and active power;
a relationship between rotational speed, grid voltage, grid frequency, LLL and reactive power;

the method further comprising:
calculating the high-level limitation further based on the at least one relationship.

7. Method according to one of the preceding claims, wherein the system (107) includes at least one of:

a rotor side converter (111) electrically coupled to the rotor of the DFIM;
a grid side converter (119) electrically coupled to the utility grid;
a DC link (117) coupled between the rotor side converter and the grid side converter;
a controller (110) connected to control the rotor side converter and/or the grid side converter and in particular configured to carry out the method.

8. Method according to one of the preceding claims, wherein the method includes to execute a power surfing algorithm (233) to obtain the high-level limitation, the power surfing algorithm including plural calculation blocks comprising at least one of:

a preconditioning block (256);
a PSA state machine block (257);
a phasor system block (258);
a positive sequence admittance block (259);
an electric limit block (260);
a maximum active quantity calculation block (261);
a maximum reactive power calculation block (262);
a limiting variables coder block (263).

9. Method according to one of the preceding claims, wherein the electric limit block (260) is configured to provide the low-level limitation in dependence of the at least one system operation condition parameter, in particular grid frequency and/or rotor speed, from at least one of:

at least one external low-level limitation (external LLL) ;
maximum DC-link voltage (Maximum udc);
a temperature and/or an ambient temperature and/or cooling water temperature of the component under consideration, in particular a converter.

10. Method according to one of the preceding claims, wherein the electric limit block (260) is configured to perform a I2t-algorithm in order to calculate, in particular for the actual operation condition, a maximum current (I max) as low-level limitation, in particular based on at least one of:

a maximum continuous RMS or thermal RMS current and/or a maximum instantaneous current as external low-level limitation; and
a measured actual current.

11. Method according to one of the preceding claims, wherein the maximum active quantity calculation block (261) is configured to calculate, as high-level limitation, the maximum stator active power and/or the maximum total active power and/or maximum total torque based on at least one of, in particular measured:

> an actual stator active power;
> an actual total active power;
> an actual total torque;
> an actual current (x);
> an actual voltage;
> machine admittances;
> GSC filter admittances;
> at least one low-level limitation (X_max), in particular current limitation.

12. Method according to one of the three preceding claims, wherein the maximum active quantity calculation block (261) and/or the maximum reactive power calculation block (262) is configured to calculate the high-level limitation (P^inc_max) by incremental calculation in dependence of:

> a measured value (Pmeas) of a high-level system operation condition parameter;
> a measured value (X_PH) of a low-level system operation condition parameter;
> a low-level limitation (X_max) relating to a limitation of the low-level system operation condition parameter;
> a model (f^) for the relationship between the high-level system operation condition parameter and the low-level system operation condition parameter.

13. Method according to one of the three preceding claims,
    wherein the maximum active quantity calculation block (261) is configured to employ the incremental calculation or an absolute calculation in dependence of whether the system is operated in motor mode or generator mode, and/or wherein the maximum reactive power calculation block (262) is configured to employ the incremental calculation or an absolute calculation in dependence of whether the system is operated to provide inductive or capacitive reactive power.

14. Arrangement (110) for determining at least one high-level limitation (HLL) of a system (107) including a doubly fed induction machine (105), the arrangement comprising:

> an input module configured to receive at least one system operation condition parameter (129) related to the actual operation condition;
> a calculation module (130) configured to calculate the high-level limitation (HLL) based on at least one low-level limitation (LLL) of components of the system and the system operation condition parameter (129).

15. Wind turbine (100), including:

> a blade rotor (101) at which plural rotor blades (103) are mounted;
> a doubly fed induction machine (105) having a rotor coupled to the blade rotor; and
> an arrangement (110) for determining at least one high-level limitation (HLL) of a system including the doubly fed induction machine (105).

FIG 1

FIG 2

EP 4 060 889 A1

**FIG 3**

Block 256 — Inputs: Commands, Control vars, Meas., External LLLs — Outputs: Main_state, frequency, rotor speed, temperature, Active & reactive powers measurments, Enable overload, Pos. Seq. voltages and currents, Maximum udc, External LLLs

Block 257 — Inputs: Main_state — Outputs: PSA_state

Block 258 — Inputs: Pos. Seq. voltages and currents, Rotor speed, frequency — Outputs: voltage and current phasors

Block 259 — Inputs: PSA_state, frequency, rotor speed, Pos. Seq. voltages and currents — Outputs: Machine admittances, GSC admittances

Block 260 (333) — Inputs: PSA_state, frequency, Rotor speed, voltage and current phasors, Maximum udc, External LLLs, temperature, Enable overload — Outputs: LLLs

Block 261 — Inputs: PSA_state, Active quantities measurments, Machine admittances, GSC admittances, LLLs, voltage and current phasors — Outputs: Active quantity HLL

Block 262 — Inputs: PSA_state, Active quantities measurments, Reactive powers measurments, Machine admittances, GSC admittances, LLLs, voltage and current phasors — Outputs: Reactive power HLLs, Reactive power limiting variable identifiers

Block 263 — Inputs: Active-quantity limiting variable, Reactive power limiting variable — Outputs: Lim_word

# FIG 4

FIG 5

FIG 6

# FIG 7

EP 4 060 889 A1

# FIG 8

Europäisches
Patentamt

European
Patent Office

Office européen
des brevets

# EUROPEAN SEARCH REPORT

Application Number

EP 21 38 2224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/219634 A1 (ARLABAN GABEIRAS TERESA [ES] ET AL) 2 September 2010 (2010-09-02) | 1-7,14, 15 | INV. H02P9/00 |
| A | * paragraph [0034] - paragraph [0049]; figure 4 * * paragraph [0024] - paragraph [0025]; figure 1 * | 8-13 | |

-----

TECHNICAL FIELDS
SEARCHED      (IPC)

H02P

The present search report has been drawn up for all claims

| Place of search | Date of completion of the search | Examiner |
|---|---|---|
| Munich | 11 August 2021 | Landi, Matteo |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 38 2224

This annex lists the patent family members relating to the patent documents cited in the above-mentioned European search report.
The members are as contained in the European Patent Office EDP file on
The European Patent Office is in no way liable for these particulars which are merely given for the purpose of information.

11-08-2021

| Patent document cited in search report | | Publication date | Patent family member(s) | | Publication date |
|---|---|---|---|---|---|
| US 2010219634 | A1 | 02-09-2010 | EP | 2224129 A2 | 01-09-2010 |
| | | | ES | 2607118 T3 | 29-03-2017 |
| | | | US | 2010219634 A1 | 02-09-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10352298 B2
- US 10355629 B2
- US 10396694 B2
- US 10570882 B2
- US 10756658 B2